(19) Europäisches Patentamt
European Patent Office
Office européen des brevets

(11) **EP 3 947 495 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **20713328.1**

(22) Anmeldetag: **29.03.2020**

(51) Internationale Patentklassifikation (IPC):
*C08G 18/08* (2006.01)    *C08G 18/10* (2006.01)
*C08G 18/12* (2006.01)    *C08G 18/32* (2006.01)
*C08G 18/42* (2006.01)    *C08G 18/48* (2006.01)
*C08G 18/50* (2006.01)    *C08G 18/66* (2006.01)
*C08G 18/76* (2006.01)    *C08G 18/79* (2006.01)
*B01J 19/24* (2006.01)

(52) Gemeinsame Patentklassifikation (CPC):
**C08G 18/7671; B01J 19/0013; B01J 19/0033; B01J 19/242; C08G 18/0895; C08G 18/10; C08G 18/12; C08G 18/3206; C08G 18/4241; C08G 18/4825; C08G 18/485; C08G 18/5024; C08G 18/6674; C08G 18/7664; C08G 18/797;**

(Forts.)

(86) Internationale Anmeldenummer:
**PCT/EP2020/058883**

(87) Internationale Veröffentlichungsnummer:
**WO 2020/201171 (08.10.2020 Gazette 2020/41)**

(54) **KONTINUIERLICHE HERSTELLUNG VON POLYURETHAN-PREPOLYMEREN**

CONTINUOUS PRODUCTION OF POLYURETHANE PREPOLYMERS

PRODUCTION CONTINUE DE PRÉPOLYMÈRES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2019   EP 19166552**

(43) Veröffentlichungstag der Anmeldung:
**09.02.2022   Patentblatt 2022/06**

(73) Patentinhaber: **BASF SE**
**67056 Ludwigshafen am Rhein (DE)**

(72) Erfinder:
• **BODMANN, Daniela**
  **49448 Lemfoerde (DE)**
• **HINKE, Carsten**
  **49448 Lemfoerde (DE)**
• **SCHLIEBE, Nadine**
  **49448 Lemfoerde (DE)**
• **DREISOERNER, Jan-Michael**
  **49448 Lemfoerde (DE)**
• **WETTACH, Henning**
  **53115 Bonn (DE)**
• **WAGNER, Hendrik**
  **49448 Lemfoerde (DE)**
• **ALBUERNE, Julio**
  **49448 Lemfoerde (DE)**
• **PUCH, Florian**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-01/14441    WO-A1-01/91897**

- **JIRI VOJTESEK ET AL: "Control Of Temperature Inside Plug-Flow Tubular Chemical Reactor Using 1DOF And 2DOF Adaptive Controllers", ECMS 2018 PROCEEDINGS EDITED BY LARS NOLLE, ALEXANDRA BURGER, CHRISTOPH THOLEN, JENS WERNER, JENS WELLHAUSEN, 25. Mai 2018 (2018-05-25), Seiten 239-245, XP055705796, DOI: 10.7148/2018-0239 ISBN: 978-0-9932440-6-3**

(52) Gemeinsame Patentklassifikation (CPC): (Forts.)
B01J 2219/00092; B01J 2219/00096;
B01J 2219/00159; B01J 2219/00166;
B01J 2219/00202; B01J 2219/00229;
B01J 2219/00238; C08G 2110/0008;
C08G 2110/0083

**Beschreibung**

Die vorliegende Erfindung betrifft ein kontinuierliches Verfahren zur Herstellung von Polyurethan-Prepolymeren in einem Verweilzeitreaktor mit Pfropfenströmung und die Verwendung dieser Prepolymeren zur Herstellung von Polyurethanen.

Die Herstellung von lagerfähigen Polyurethan-Prepolymeren kann durch Batch-Verfahren und kontinuierliche Verfahren erfolgen.

WO1994/29361 A1 beschreibt die klassische Herstellung von Isocyanat-terminierten Prepolymeren bei Temperaturen von 40-100°C in einem Reaktionsgefäß.

DE 198 23 392 A1 beschreibt die Herstellung von Isocyanat-terminierten Polyurethan-Prepolymeren durch den Einsatz eines dynamischen Mischkopfes einer Schaumanlage. Dabei erfolgt innerhalb des gleichen Prozesses direkt die Verschäumung zum Polyurethanformteil.

DE 10 2010 027 052 A1 betrifft die kontinuierliche Herstellung von Isocyanat-terminierten Polyurethan-Prepolymeren, wobei die Komponenten in einer Mischvorrichtung zusammengeführt werden und die eigentliche Reaktion in einem Lager- oder Mischtank vollendet wird.

WO 2001/091897 A1 offenbart die kontinuierliche Herstellung von Isocyanat-terminierten Polyurethan-Prepolymeren mittels Plug-Flow-Reaktor, wobei der Reaktor ein perforierter Plattenreaktor ist. Die Vermischung der Komponenten erfolgt hierbei separat.

Aus WO 2001/014441 A1 geht die temperaturgeführte Herstellung von Isocyanat-terminierten Polyurethan-Prepolymeren mit einem niedrigen Rest-NCO-Gehalt hervor. Die Isocyanat-terminierten Polyurethan-Prepolymere werden kontinuierlich in einem statischen Mischer hergestellt, wobei die Verhältnisse bis maximal +/- 5% in den jeweiligen Anteilen schwanken.

EP 0 722 962 A2 offenbart ein kontinuierliches Verfahren zur Herstellung von Isocyanat-terminierten Polyurethan-Prepolymeren. Die Herstellung betrifft Prepolymere mit einem NCO-Gehalt zwischen 5% und 15%. Im Anschluss an die Herstellung wird das Prepolymer direkt in den Schaumprozess überführt, der zu einem Polyurethanformteil führt.

Vojtesek. J. et al.:"Control of temperature inside plug-flow tubular chemical reactor using 1DOF and 2DOF adaptive controllers", in Proceedings - European Council for Modelling and Simulation, ECMS, 2018, S. 239-245 stellen Simulationsergebnisse der adaptiven Regelung eines chemischen Rohrreaktors als typisches Industriegerät vor. Das mathematische Modell des Rohrreaktors wird durch einen Satz nichtlinearer partieller Differentialgleichungen beschrieben. Die Adaptivität des Reglers wird durch die rekursive Identifizierung des externen linearen Modells als lineare Repräsentation des ursprünglich nichtlinearen Systems erfüllt. Es werden Ergebnisse für Steuersysteme mit einem Freiheitsgrad (1DOF) und zwei Freiheitsgraden (2DOF) verglichen.

Aufgabe der Erfindung war es, ein kontinuierliches Verfahren zur Herstellung von Polyurethan-Prepolymeren bereitzustellen, das die Herstellung unterschiedlicher Prepolymere mit nahezu vollständigem Umsatz und hoher Reproduzierbarkeit erlaubt und kurze Reaktionszeiten mit geringem Energiebedarf verbindet.

Es wurde nun gefunden, dass in einem Verweilzeitreaktor mit Pfropfenströmung Produkte mit gleicher Spezifikation (z. B. NCO-Gehalt und Viskosität) wie bei dem entsprechenden Rührkesselverfahren erhalten werden können, insbesondere bei einer adiabaten Temperaturführung. Die erhaltenen Produkte zeigen exzellente Lagerstabilitäten und liefern in den entsprechenden Polyurethanformteilen gleiche Eigenschaften wie Polyurethan-Prepolymere, die mit einem herkömmlichen Rührkesselverfahren hergestellt wurden. Der Prozess ist darüber hinaus mit einer selbstlernenden Prozessoptimierung aufgesetzt, bei der eine dynamische Rezepturführung erfolgt, so dass die Produktqualität nur noch sehr geringfügigen Schwankungen obliegt, auch wenn beispielsweise Schwankungen von Rohstoffqualitäten oder Umgebungsbedingungen auftreten.

Gegenstand der Erfindung ist ein kontinuierliches Verfahren zur Herstellung von Polyurethan-Prepolymeren. Das Verfahren umfasst die Umsetzung von a) Di- oder Polyisocyanaten mit b) Verbindungen mit gegenüber Isocyanatgruppen reaktiven Wasserstoffatomen, gegebenenfalls in Gegenwart von c) Katalysatoren, Additiven, Hilfs- und/oder Zusatzstoffen, in einem Verweilzeitreaktor mit Pfropfenströmung. In einer Ausführungsform des Verfahrens erfolgt die Umsetzung im Verweilzeitreaktor unter adiabaten Reaktionsbedingungen.

Im erfindungsgemäßen Verfahren wird der Wert mindestens einer physikalischen Eigenschaft des den Verweilzeitreaktor verlassenden Produkts periodisch oder kontinuierlich überprüft, und bei einer Abweichung von einem vorgegebenen Zielwert werden die Temperatur und/oder die Flussrate der in den Verweilzeitreaktor eintretenden Edukte und/oder die (Gesamt-)Flussrate durch den Verweilzeitreaktor und/oder die Temperatur des Verweilzeitreaktors angepasst. Erfolgt die Umsetzung im Verweilzeitreaktor unter adiabaten Reaktionsbedingungen, so werden bei einer Abweichung von dem vorgegebenen Zielwert die Temperatur und/oder die Flussrate der in den Verweilzeitreaktor eintretenden Edukte und/oder die (Gesamt-)Flussrate durch den Verweilzeitreaktor angepasst.

In einer Ausführungsform des Verfahrens weicht der Wert mindestens einer physikalischen Eigenschaft des den Verweilzeitreaktor verlassenden Produkts weniger als 10%, bevorzugt weniger als 8%, besonders bevorzugt weniger als 6% von einem vorgegebenen Zielwert ab. Dies bedeutet, dass die Umsetzung der Edukte im Verweilzeitreaktor nahezu vollständig erfolgt, das heißt, dass die Reaktion beim Verlassen des Verweilzeitreaktors bereits weitestgehend abgeschlossen ist. Die Umsetzung ist zu mindestens 90%, bevorzugt mindestens 95%, insbesondere mindestens 98% vollständig.

Der vorgegebene Zielwert entspricht dem in der Produktspezifikation des herzustellenden Prepolymers genannten Wert der entsprechenden physikalischen Eigenschaft. Beispiele physikalischer Eigenschaften des Produkts sind der NCO-Wert (bestimmt gemäß EN ISO 11909), die Viskosität (gemessen bei 25°C gemäß DIN EN ISO 3219 mit Platte/Kegel-Messgeometrie bei einer Scherrate von 40 1/s), das Molekulargewicht (Zahlenmittel gemäß DIN55672-2, Kalibrierung mit PMMA), die Hydroxylzahl (nach DIN 5342 [1971-12]), oder die Farbzahl (Hazen-Farbzahl bestimmt nach ISO 6271 oder Gardner-Farbzahl bestimmt nach ISO 4630). In der Regel kann der Zielwert messbedingt nur mit einer Genauigkeit von ±5% bestimmt werden.

In einer Ausführungsform wird der Wert der mindestens einen physikalischen Eigenschaft des den Verweilzeitreaktor verlassenden Produkts periodisch untersucht, beispielsweise jeweils alle 10 Sekunden bis alle 10 Minuten, oder alle 30 Sekunden bis alle 5 Minuten. In einer anderen Ausführungsform wird der Wert der mindestens einen physikalischen Eigenschaft des den Verweilzeitreaktor verlassenden Produkts kontinuierlich überprüft.

In einer Ausführungsform umfasst der Prozess eine umfassende kontinuierliche Prozess- und Produktkontrolle sowie die Aufnahme von Prozessdaten und Umgebungsparametern. Beispiele für Prozessparameter sind die Änderung der Viskosität, die Reaktionstemperatur, oder der Reaktionsumsatz (zum Beispiel als Funktion des NCO-Gehaltes). Beispiele für Umgebungsparameter sind Luftdruck, Luftfeuchtigkeit oder Umgebungsdruck. Datenverarbeitung und Feedback-Schleifen ermöglichen eine kontinuierliche Prozessverbesserung.

Erfindungsgemäß erfolgt die Umsetzung in einem Verweilzeitreaktor mit Pfropfenströmung ("Plug-Flow-Reaktor"). Unter einem Verweilzeitreaktor mit Pfropfenströmung wird erfindungsgemäß ein Reaktor, vorzugsweise ein Rohrreaktor, verstanden, der eine Bodenstein-Zahl von mindestens 60, bevorzugt mindestens 80 und insbesondere mindestens 100 aufweist. Die Bodenstein-Zahl gibt das Verhältnis von konvektivem und diffusivem Transport im Reaktor an. Sie charakterisiert die Rückvermischung innerhalb eines Systems und ermöglicht somit Aussagen darüber, ob und wie stark sich Volumenelemente oder Stoffe innerhalb eines Reaktors durch die herrschenden Strömungen vermischen. Definiert ist sie als das Verhältnis des Konvektionsstroms zum Dispersionsstrom. Sie ist ein Bestandteil des Dispersionsmodelles und wird daher auch als dimensionsloser Dispersionskoeffizient bezeichnet.

Die Bodenstein-Zahl Bo berechnet sich gemäß

$$Bo = u * L / D_{ax,}$$

Hierin sind:

u: die Strömungsgeschwindigkeit;
L: die Länge des Reaktors;
$D_{ax}$: der axiale Dispersionskoeffizient

Die Bodenstein-Zahl kann experimentell aus der Verweilzeitverteilung gewonnen werden. Bei Annahme eines offenen Systems gilt:

$$\sigma_\theta^2 = \sigma^2/\tau^2 = 2/Bo + 8/(Bo)^2$$

mit

$\sigma_\theta^2$: dimensionslose Varianz;
$\sigma^2$: Varianz um die mittlere Verweilzeit;
$\tau$: hydrodynamische Verweilzeit ($\tau = V_R/\dot{V}$ worin $V_R$ das Volumen des Reaktors und V den Volumenstrom des Reaktors bedeuten).

Die Bodensteinzahl ist das Maß für die Breite der Verweilzeitverteilung nach dem Dispersionsmodell. Aus dem gemessenen Verweilzeitspektrum wird die Verweilzeitsummenkurve erstellt und damit die Bodensteinzahl im Reaktor ermittelt.

In einer Ausführungsform erfolgt die Umsetzung unter adiabaten Reaktionsbedingungen in einem Verweilzeitreaktor mit Pfropfenströmung ("Plug-Flow-Reaktor"). Der Plug-Flow-Reaktor wird verwendet, um eine gleichmäßige Verweilzeitverteilung zu erreichen. Um eine möglichst adiabate Fahrweise zu gewährleisten, muss der Plug-Flow-Reaktor gut isoliert sein. In einer Ausführungsform des Verfahrens ist der Verweilzeitreaktor ein statischer Mischer, der in einer Variante mit einem Doppelmantel als Isolierung versehen ist. In einer weiteren Ausführungsform des Verfahrens ist der Verweilzeitreaktor ein dynamischer Mischer, der in einer Variante mit einem Doppelmantel als Isolierung versehen ist.

Unter adiabaten Reaktionsbedingungen ist in der vorliegenden Erfindung gemeint, dass die für die Umsetzung der Edukte zum Polyurethan-Prepolymer benötigte Prozesswärme ausschließlich durch das Vorheizen der Edukte und die Reaktionswärme, nicht jedoch durch eine isotherme Prozessführung bereitgestellt wird. Dies schließt nicht aus, dass beim Anfahren des kontinuierlichen Prozesses gegebenenfalls ein Vorheizen des Verweilzeitreaktors erfolgt.

In einer anderen Ausführungsform erfolgt die Umsetzung im Verweilzeitreaktor nicht unter adiabatischen Reaktionsbedingungen. Weicht der Wert der mindestens einer physikalischen Eigenschaft des den Verweilzeitreaktor verlassenden Produkts von einem vorgegebenen Zielwert ab, so kann neben einer Anpassung der Temperatur und/oder der Flussrate der in den Verweilzeitreaktor eintretenden Edukte und/oder der (Gesamt-)Flussrate durch den Verweilzeitreaktor auch eine Anpassung der Temperatur des Verweilzeitreaktors erfolgen, also der Verweilzeitreaktor zusätzlich beheizt oder gekühlt werden.

In einer Ausführungsform des Verfahrens wird der Plug-Flow-Reaktor beim Anfahren auf die gewünschte Starttemperatur der Reaktion gebracht, damit nicht zu viel Reaktionsenergie durch das Erwärmen des Reaktors verloren geht. Zur Beheizung kann bei einem Doppelmantel-Statikmischer Öl, Wasser oder Dampf verwendet werden; oder es wird eine elektrische Begleitheizung eingesetzt. Nach dem Anfahren kann das Verfahren über einen längeren Zeitraum ohne Unterbrechung betrieben werden, beispielsweise bis zu zwei Wochen oder auch länger.

In einer Ausführungsform des Verfahrens wird die Temperatur der in den Verweilzeitreaktor eintretenden Edukte über einen Wärmetauscher eingestellt. In einer Ausführungsform ist der Wärmetauscher ein Platten-Wärmetauscher. In einer anderen Ausführungsform ist der Wärmetauscher ein RohrbündelWärmetauscher.

In einer Ausführungsform des Verfahrens weisen die in den Verweilzeitreaktor eintretenden Edukte eine Temperatur im Bereich von 40°C bis 150°C, bevorzugt im Bereich von 50°C bis 140°C, noch bevorzugter im Bereich von 60°C bis 130°C und am meisten bevorzugt im Bereich von 80°C bis 120°C auf, beispielsweise von 80°C bis 100°C.

In einer Ausführungsform des Verfahrens wird die Flussrate durch den Verweilzeitreaktor über die Steuerung der Fördermenge der Edukte in den Verweilzeitreaktor eingestellt. In einer Ausführungsform erfolgt die Förderung der Edukte durch mindestens eine Schraubenspindelpumpe.

In einer Ausführungsform des Verfahrens beträgt die Verweilzeit in dem Verweilzeitreaktor 5 bis 15 Minuten, beispielsweise 8 bis 12 Minuten. Die Verweilzeit ergibt sich als Quotient des Volumens des Verweilzeitreaktors und der Flussrate des Produktstroms durch den Verweilzeitreaktor. In einer Ausführungsform des Verfahrens ist die Reaktion im Verweilzeitreaktor innerhalb von maximal 10 Minuten abgeschlossen.

Erfindungsgemäß wird mindestens eine physikalische Eigenschaft des den Verweilzeitreaktor verlassenden Produkts periodisch oder kontinuierlich überprüft. In einer Ausführungsform des Verfahrens wird die Zusammensetzung des den Verweilzeitreaktor verlassenden Produkts mittels NIR-Spektroskopie ermittelt. Beispielsweise kann die Umsetzung mittels einer NIR-Sonde verfolgt werden. Weicht die Zusammensetzung des den Verweilzeitreaktor verlassenden Produkts von der Vorgabe ab, erfolgt eine dynamische Anpassung des Temperatur-Reaktionszeitprofils. Umsatzschwankungen können somit durch Rückkopplung mit der Dosiereinheit weitergehend dynamisch abgefangen werden. Es erfolgt somit eine dynamische Rezepturführung, so dass die Produktqualität nur noch sehr geringfügigen Schwankungen obliegt.

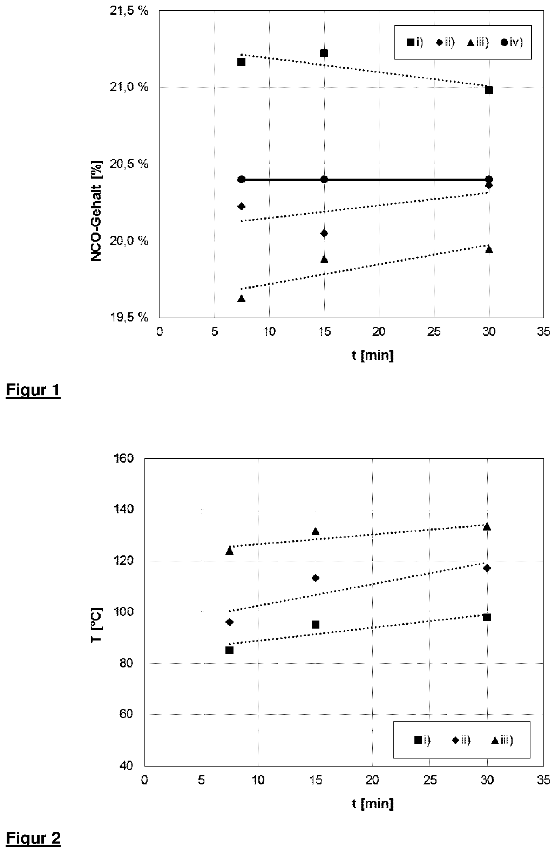

In Figur 1 ist beispielhaft der Verlauf des NCO-Gehalts des den Verweilzeitreaktor verlassenden Produkts einer solchen Feedback-Schleife über eine Prozesslaufzeit von ca. 30 Minuten für verschiedene Starttemperaturen am Eingang des Verweilzeitreaktors abgebildet. Die Messung des NCO-Gehalts erfolgte über eine NIR-Sonde. Auf der Abszisse ist die Prozesslaufzeit in Minuten aufgetragen, auf der Ordinate der NCO-Gehalt in Prozent. Kurve i) wurde für eine Starttemperatur von 60°C; Kurve ii) für eine Starttemperatur von 80°C; Kurve iii) für eine Starttemperatur von 100°C erhalten. Kurve iv) zeigt zum Vergleich den Verlauf in einem Batch-Prozess. Wie aus dem Diagramm ersichtlich, nähert sich mit fortschreitender Prozesslaufzeit der NCO-Gehalt des Produkts dem durch die Kurve des Batch-Prozesses repräsentierten Zielwert an.

In Figur 2 ist beispielhaft der Verlauf der Temperatur des den Verweilzeitreaktor verlassenden Produkts einer solchen Feedback-Schleife über eine Prozesslaufzeit von ca. 30 Minuten für verschiedene Starttemperaturen am Eingang des Verweilzeitreaktors abgebildet. Die Verweilzeit im Reaktor betrug jeweils 10 Minuten. Auf der Abszisse ist die Prozesslaufzeit in Minuten aufgetragen, auf der Ordinate die Temperatur in Grad Celsius. Kurve i) wurde für eine Starttemperatur von 60°C; Kurve ii) für eine Starttemperatur von 80°C; Kurve iii) für eine Starttemperatur von 100°C erhalten.

Bei dem erfindungsgemäßen Verfahren handelt es sich um einen lernenden kontinuierlichen Prozess zur Herstellung von Polyurethan-Prepolymeren. Nach dem Start des Prozesses durchläuft dieser zunächst eine instabile Phase A, die in einen stationären Zustand B (steady state) übergeht, in dem noch kleinere Anpassungen von Parametern möglich sind. Während des Prozesses erfolgt periodisch oder kontinuierlich eine Messung bzw. Ermittlung von Prozessdaten C und eine Messung bzw. Ermittlung von Produktdaten D. In einer Ausführungsform umfassen die Prozessdaten Temperaturen, Drücke und Massenströme. In einer Ausführungsform umfassen die Produktdaten den NCO-Gehalt (z. B. via online-NIR Messung ermittelt), die Viskosität und die Farbzahl des den Verweilzeitreaktor verlassenden Produkts. Die Prozessdaten und Produktdaten sowie gegebenenfalls externe Daten werden einer Datenverarbeitung, z. B. in einem Production Information Management System (PIMS) oder einer cloud-basierten Datenbank, zugeführt und es erfolgt eine Datenanalyse G. In einer Ausführungsform umfassen die externen Daten den NCO-Gehalt (bspw. via nass-schemische Analyse ermittelt), die Viskosität, und die Farbzahl (z. B. Hazen-Farbskala nach ISO 6271 oder Gardner-Farbzahl nach ISO 4630) des den Verweilzeitreaktor verlassenden Produkts, sowie gegebenenfalls zusätzlich Klimadaten (Wetterbedingungen, Umgebungstemperatur, Luftfeuchtigkeit, Luftdruck), und/oder Zeitangaben (Uhrzeit, Datum). Auf Basis der Datenanalyse werden durch Optimierungsalgorithmen zur Parameteranpassung neue Parameter berechnet. Die Parameteroptimierung erfolgt in einer Ausführungsform offline. In einer anderen Ausführungsform werden Algorithmen eingesetzt, die in Echtzeit eine Parameteranpassung berechnen, also eine online-Optimierung vornehmen. Die optimierten Parameter werden dann zur Steuerung des Verfahrens eingesetzt. Durch diese Rückkopplung erfolgt somit eine dynamische Prozessführung, so dass die Produktqualität nur noch sehr geringfügigen Schwankungen obliegt.

In einer Ausführungsform handelt es sich bei den Polyurethan-Prepolymeren um Isocyanat-terminierte Prepolymere. In einer anderen Ausführungsform handelt es sich bei den Polyurethan-Prepolymeren um Hydroxy-terminierte Prepolymere.

Im erfindungsgemäßen Verfahren werden Di- oder Polyisocyanate mit Verbindungen mit gegenüber Isocyanatgruppen reaktiven Wasserstoffatomen umgesetzt. Das erfindungsgemäße Verfahren kann auf verschiedene Di- oder Polyisocyanate angewendet werden, insbesondere auf aromatische oder aliphatische Di- oder Polyisocyanate. Insbesondere eignen sich MMDI und PMDI als Isocyanate für das erfindungsgemäße Verfahren.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Octamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyl-diisocyanat ($H_{12}$MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat ($H_{12}$MDI).

Geeignete aromatische Diisocyanate sind insbesondere 1,5-Naphthylendiisocyanat (NDI), 2,4- und/oder 2,6-Toluylendiisocyanat (TDI), 2,2'-, 2,4'-und/oder 4,4'-Diphenylmethandiisocyanat (MMDI) beziehungsweise auch Mischungen daraus sowie höhere Homologe (PMDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyldiphenyldiisocyanat, 1,2-Diphenylethandiisocyanat und/oder Phenylendiisocyanat.

Gemäß einer weiteren Ausführungsform betrifft die vorliegende Erfindung auch eine Zusammensetzung wie zuvor beschrieben, wobei die Isocyanat-Zusammensetzung mindestens ein Isocyanat ist ausgewählt aus der Gruppe bestehend aus 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), 3,3'-Dimethyl-4,4'-Diisocyanato-Diphenyl (TODI), p-Phenylendiisocyanat (PDI), Hexamethylen-1,6-diisocyanat (HDI), 1-Isocyanato-3,3,5-trimethyl-5-isocyanatomethylcyclohexan und 4,4'-, 2,4'-und/oder 2,2'-Methylendicyclohexyldiisocyanat ($H_{12}$MDI), und 1-Isocyanato-3,3,5-trimethyl-5-isocyanatomethylcyclohexan (Isophorondiisocyanat, IPDI) oder Derivate dieser Isocyanate enthält.

Im Rahmen der vorliegenden Erfindung ist es auch möglich, dass höherfunktionelle Isocyanate eingesetzt werden, beispielsweise Triisocyanate, z. B. Triphenylmethan-4,4',4"-triisocyanat, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als zwei und vorzugsweise drei oder mehr Hydroxy-Gruppen aufweisen, erhältlich sind.

Erfindungsgemäß kann die Polyisocyanatzusammensetzung auch ein oder mehrere Lösungsmittel enthalten. Geeignete Lösungsmittel sind dem Fachmann bekannt. Geeignet sind beispielsweise nicht reaktive Lösungsmittel wie Ethylacetat, Methylethylketon und Kohlenwasserstoffe.

In einer Ausführungsform des erfindungsgemäßen Verfahrens werden als Verbindungen mit gegenüber Isocyanatgruppen reaktiven Wasserstoffatomen Polyetherpolyole und/oder Polyesterpolyole eingesetzt. Die Bandbreite der einsetzbaren Polyole reicht von Polyetherpolyolen auf Basis von zum Beispiel Propylenglykol (PPGs), oder Butandiol (PolyTHF) bis hin zu Polyesterpolyolen. Erfindungsgemäß sind Polyetherole geeignet, aber auch Polyesterole, Blockcopolymere sowie Hybridpolyole wie z. B. Poly(ester/amid) oder Poly(ester/ether). Bevorzugte Polyole sind Polytetramethylenetherglykol, Polyethylenglykole, Polypropylenglykole, Polyadipate, Polycarbonat(diol)e und Polycaprolacton. Das zahlenmittlere Molekulargewicht der erfindungsgemäß eingesetzten Polyole beträgt vorzugsweise von $0{,}3 \times 10^3$ g/mol bis $8 \times 10^3$ g/mol, bevorzugt von $0{,}4 \times 10^3$ g/mol bis $5 \times 10^3$ g/mol (das zahlenmittlere Molekulargewicht wird bestimmt gemäß DIN55672-2; die Kalibrierung erfolgt mit PMMA). Die Hydroxylzahlen der erfindungsgemäß einsetzbaren Polyole betragen von 5 bis 1500 mg KOH/g (nach DIN 5342 [1971-12]). Bevorzugt haben die eingesetzten Polyole bzw. die Polyolzusammensetzung eine mittlere Funktionalität von 1 bis 6,5, besonders bevorzugt von 1,5 bis 4,5, insbesondere bevorzugt von 1,8 bis 4,0.

Gemäß einer weiteren Ausführungsform enthält die Polyolzusammensetzung ein Polyol ausgewählt aus der Gruppe bestehend aus Polyethern, Polyestern, Polycaprolactonen und Polycarbonaten.

Geeignete Polyole sind beispielsweise Polyetherole wie Polytrimethylenoxid oder Polytetramethylenoxid.

Geeignete Polyesterpolyole, insbesondere Polyesterdiole, können beispielsweise aus Dicarbonsäuren mit 2 bis 12 Kohlenstoffatomen, vorzugsweise 4 bis 10 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, beispielsweise in Form einer Bernstein-, Sebacin- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, beispielsweise Dimethylterephthalat oder Dimethyladipat, Carbonsäureanhydride, beispielsweise Bernsteinsäureanhydrid, Glutarsäureanhydrid oder Phthalsäureanhydrid, oder Carbonsäurechloride zu verwenden. Beispiele für mehrwertige Alkohole sind Glykole mit 2 bis 10, vorzugsweise 2 bis 6 Kohlenstoffatomen, beispielsweise Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol, 2-Methylpropandiol-1,3, 3-Methylpentandiol-1,5 oder Dipropylenglykol. Die mehrwertigen Alkohole können einzeln oder als Gemische, beispielsweise in Form einer 1,4-Butandiol- und/oder 1,3-Propandiolmischung verwendet werden. Daneben können auch geringe Mengen von bis zu 3 Gew.-% an der Gesamtreaktionsmischung höherfunktionelle, niedermolekulare Polyole wie beispielsweise 1,1,1-Trimethylolpropan oder Pentaerythrit mitverwendet werden.

Geeignete Blockcopolymere sind beispielsweise solche, die Ether und Esterblöcke aufweisen, wie beispielsweise Polycaprolacton mit Polyethylenoxid- oder Polypropylenoxid-Endblöcken oder auch Polyether mit Polycaprolactonendblöcken. Bevorzugte Polyetherole sind erfindungsgemäß Polyethylenglykole und Polypropylenglykole. Weiterhin bevorzugt ist Polycaprolacton.

Es ist jedoch im Rahmen der vorliegenden Erfindung auch möglich, Polyolmischungen einzusetzen. Erfindungsgemäß kann die Polyolzusammensetzung auch Lösungsmittel enthalten. Geeignete Lösungsmittel sind dem Fachmann an sich bekannt.

In einer Ausführungsform des Verfahrens werden Polyol-Komponenten und Isocyanat-Komponenten und ggfs. Katalysatoren, Additive, Hilfs- und/oder Zusatzstoffe in einer Mischvorrichtung zusammengeführt.

Den nach dem erfindungsgemäßen Verfahren hergestellten Prepolymeren können Stabilisatoren wie z. B. Wasserfänger oder Komplexierungsmittel zugesetzt werden, die die Anfälligkeit gegenüber Luftfeuchtigkeit bzw. Verunreinigungen senken und somit die Lagerstabilität der Prepolymeren verbessern. Vorzugsweise kommen als Stabilisatoren Säuren, wie Phosphorsäure oder Zitronensäure, Benzoylchlorid und/oder para-Toluensulfonylisocyanat zum Einsatz. Bei Anwesenheit beträgt die Konzentration dieser Verbindungen im Prepolymeren von 0,01 Gew.-% bis 3 Gew.-%, vorzugsweise von 0,01 Gew.-% bis 0,1 Gew.-%.

Als Katalysatoren können basische Polyurethankatalysatoren verwendet werden, beispielsweise tertiäre Amine, wie Triethylamin, Tributylamin, Dimethylbenzylamin, Dicyclohexylmethylamin, Dimethylcyclohexylamin, Bis(2-dimethylaminoethyl)ether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Dimethylpiperazin, N-Dimethylaminoethylpiperidin, 1,2-Dimethylimidazol, 1-Azabicyclo[2.2.0]octan, 1,4-Diazabicyclo-[2.2.2]octan (Dabco), 1,8-Diazabicyclo[5.4.0]undecen-7, und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N''-Tris-(dialkylaminoalkyl)hexahydrotriazine, z. B. N,N',N''-Tris-(dimethylaminopropyl)-s-hexahydrotriazin, und Triethylendiamin. Geeignet sind auch Metallsalze, wie Zinn-, Titan-, Zirconium-, Hafnium , Bismut-, Zink-, Aluminium- und Eisenverbindungen, beispielsweise Zinnorganyle, bevorzugt Zinnalkylverbindungen, wie Dimethylzinn oder Diethylzinn, oder Zinnorganyle auf Basis von aliphatischen Carbonsäurederivaten, bevorzugt Zinndiacetat, Zinndilaurat, Dibutylzinndiacetat, Dibutylzinndilaurat, Bismutverbindungen, wie Bismutorganyle oder verwandte Verbindungen oder Eisenverbindungen, bevorzugt Eisen-(II)-acetylacetonat, Eisen(II)-chlorid oder Metallsalze von Carbonsäuren wie Zinn-(II)-isooctoat, Zinndioctoat, Titansäureester, Zinkchlorid, oder Bismut-(III)-neodecanoat.

Als Katalysatoren kommen ferner in Betracht: Amidine wie 2,3-Dimethyl-3,4,5,6-tetrahydropyrimidin, Tetraalkylammoniumhydroxide wie Tetramethylammoniumhydroxid, Alkalihydroxide wie Natriumhydroxid, und Alkalialkoholate wie Natriummethylat und Kaliumisopropylat, sowie Alkalisalze von Säuren, insbesondere langkettigen Fettsäuren mit 10 bis 20 C-Atomen und gegebenenfalls seitenständigen OH-Gruppen.

Des Weiteren können oberflächenaktive Substanzen Teil der Reaktionsmischung sein. Dabei kommen z. B. Verbindungen in Betracht, welche zur Unterstützung der Homogenisierung der Ausgangsstoffe dienen und gegebenenfalls auch geeignet sind, die Zellstruktur der schließlich hergestellten Kunststoffe zu regulieren. Genannt seien beispielsweise Emulgatoren, wie die Natriumsalze von Ricinusölsulfaten oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler wie Paraffine, Fettalkohole und Dimethylpolysiloxane. Besonders bevorzugt sind Silikonstabilisatoren.

Es können auch Kettenverlängerer als Additive der Reaktionsmischung hinzugefügt werden. Als Kettenverlängerer können beispielsweise allgemein bekannte aliphatische, araliphatische, aromatische und/oder cycloaliphatische Verbindungen mit einem Molekulargewicht von 50 bis 499 g/mol, bevorzugt bifunktionelle Verbindungen, eingesetzt werden, beispielsweise Alkandiole mit 2 bis 10 C-Atomen im Alkylenrest, beispielsweise Diole ausgewählt aus der Gruppe bestehend aus $C_2$- bis $C_6$-Diolen, bevorzugt Butandiol-1,4, Hexandiol-1,6 und/oder Di-, Tri-, Tetra-, Penta-, Hexa-, Hepta-, Octa-, Nona- und/oder Dekaalkylenglykole mit 3 bis 8 Kohlenstoffatomen, bevorzugt unverzweigte Alkandiole, insbesondere 1,3- Propandiol, Butan-1,4-diol und 1,6-Hexandiol. Auch verzweigte Verbindungen wie 1,4-Cyclohexyldimethanol, 2-Butyl-2-ethylpopandiol, Neopentylglykol, 2,2,4-Trimethyl-1,3-pentanediol, Pinakol, 2-Ethyl-1,3-hexandiol, 1,4-Cyclohexandiol, oder N-Phenyldiethanolamin sind im Rahmen der vorliegenden Erfindung als Kettenverlängerer geeignet. Ebenfalls geeignet sind Verbindungen mit OH und NH Gruppen wie beispielsweise 4-Aminobutanol. Erfindungsgemäß können auch Mischungen mehrerer Kettenverlängerer eingesetzt werden.

Gegebenenfalls vorhandene Additive, Zusatzstoffe oder Hilfsmittel können beispielsweise ausgewählt sein aus der Gruppe der Füllstoffe, Treibmittel, Flammschutzmittel, Farbstoffe, Pigmente, IR-absorbierenden Materialien, UV-Stabilisatoren, Weichmacher, Antistatika, Fungistatika, Bakteriostatika, Hydrolyseschutzmittel, Antioxidantien, Zellregulatoren und Mischungen davon.

In einer Ausführungsform erfolgt die Zugabe von Additiven, Zusatzstoffen oder Hilfsmitteln nach der kontinuierlichen Fertigung der Prepolymeren vor oder nach einem möglichen Abkühlungsschritt, jedoch vor der Abfüllung.

Weitere Einzelheiten zu Hilfs- und Zusatzstoffen finden sich beispielsweise im Kunststoffhandbuch, Band 7, "Polyurethane", Carl-Hanser-Verlag München, 1. Auflage, 1966, 2. Auflage, 1983 und 3. Auflage, 1993.

Die Prepolymeren, die nach dem erfindungsgemäßen Verfahren erhalten werden, weisen typischerweise Viskositäten bei 25°C im Bereich von 60 mPas bis 500 Pas, bevorzugt im Bereich 80 mPas bis 200 Pas, und besonders bevorzugt im Bereich 90 mPas bis 100 Pas auf (gemessen gemäß DIN EN ISO 3219 und mit Platte/Kegel-Messgeometrie bei einer Scherrate von 40 1/s).

Isocyanat-terminierte Prepolymere können NCO-Gehalte (gemessen gemäß EN ISO 11909) von 50 Gew.-% bis 0,5 Gew.-% aufweisen, bevorzugt von 45 Gew.-% bis 0,8 Gew.-%, besonders bevorzugt von 35 Gew.-% bis 1,0 Gew.-%, und am meisten bevorzugt von 33 Gew.-% bis 3 Gew.-%.

Hydroxyterminierte Prepolymere können nach dem erfindungsgemäßen Verfahren ebenfalls erhalten werden können. Im Rahmen der vorliegenden Erfindung wird unter einem hydroxyterminierten Prepolymeren verstanden, dass der überwiegende Anteil, beispielsweise mehr als 80%, bevorzugt mehr als 90%, besonders bevorzugt mehr als 99%, der im Prepolymer vorhandenen Endgruppen Hydroxygruppen sind. Die gegebenenfalls verbleibenden Endgruppen sind Isocyanat-Endgruppen. Hydroxyterminierte Prepolymere können Hydroxidzahlen im Bereich von 3 bis 1400 mg KOH/g aufweisen.

Die nach den erfindungsgemäßen Verfahren hergestellten Prepolymere können zur Herstellung von Polyurethanen, insbesondere Polyurethanschäumen, wie zum Beispiel Hartschäumen, Weichschäumen, Halbhartschäumen oder Integralschäumen, Klebstoffen, wie z. B. Verpackungsklebstoffen und Heißschmelzklebstoffen, sogenannten Hotmelts, Dichtstoffen, Elastomeren, Beschichtungen, Duromeren und Thermoplasten, verwendet werden.

Die nach dem erfindungsgemäßen Verfahren hergestellten Prepolymere können kontinuierlich, oder auch über zwischengeschaltete Lagertanks weiterführenden Verarbeitungstechnologien, wie Spritzguss, Extrusion, Niederdruck- oder Hochdruck-Verarbeitung zugeführt werden.

In einer beispielhaften Ausführungsform des Verfahrens werden die Polyol-Komponenten mittels Schraubenspindelpumpen aus Lagerbehältern (gegebenenfalls über einen mit Öl, Wasser, oder Dampf beheizten Wärmetauscher zur Einstellung einer gewünschten Temperatur) in die Mischvorrichtung gepumpt. Alternativ können die Polyol-Komponenten auch mit Lager- oder Umgebungstemperatur ohne Nutzung des Wärmetauschers dosiert werden. Es können auch mehrere Polyol-Komponenten in einem vorgeschalteten Statikmischer vorvermischt und in einem Wärmetauscher vorgewärmt werden, so dass nur ein Polyolstrom in die Mischvorrichtung geht.

In einer Ausführungsform des Verfahrens werden die Isocyanat-Komponenten aus Lagerbehältern ebenfalls in einem Statikmischer vorvermischt und gegebenenfalls über einen Wärmetauscher temperiert. Es können mehrere Isocyanat-Komponenten vorvermischt und die Isocyanat-Komponenten sowohl temperiert als auch bei Umgebungstemperatur dosiert werden. In einer beispielhaften Ausführungsform werden die Isocyanat-Komponenten über Schraubenspindelpumpen gefördert.

Im Anschluss an die Mischvorrichtung strömt die Isocyanat-Polyol-Mischung kontinuierlich durch einen Wärmetauscher und wird dort auf die gewünschte Starttemperatur der Reaktion gebracht. Dem Wärmetauscher nachgeschaltet ist der Plug-Flow-Reaktor.

In einer Ausführungsform des Verfahrens werden die exakten Dosierströme der Edukte über Massedurchflussmesser erfasst und der Regelung des in den Verweilzeitreaktor dosierten Eduktstroms zugrunde gelegt.

Gegebenenfalls können dem Stoffstrom vor oder nach dem Verweilzeitreaktor noch zusätzliche Komponenten zugegeben werden, z. B. dem Fachmann im Prinzip bekannte Katalysatoren, Stabilisatoren, Additive oder Treibmittel.

In einer Ausführungsform des erfindungsgemäßen Verfahrens wird das den Verweilzeitreaktor verlassende Reaktionsprodukt zur Kühlung in einen nachgeschalteten Wärmetauscher gefördert und darin auf Abfülltemperatur gebracht. Auch hier kommen verschiedene Wärmetauschertypen in Frage, beispielsweise ein Plattenwärmetauscher. Im Anschluss kann das Produkt direkt abgefüllt werden, z. B. in Kundengebinde (Fass, IBC), einen Tankzug oder einen Lagertank. Zudem kann das Produkt auch direkt weiterverarbeitet werden und z. B. unmittelbar einem Schäum-, Gieß-, Extrusions- oder SpritzgussProzess, bzw. anderen Polyurethanverarbeitungsverfahren zugeführt werden.

In einer Ausführungsform des erfindungsgemäßen Verfahrens erfolgt die Auswahl eines herzustellenden Polyurethan-Prepolymers während des laufenden Betriebs, d. h. es wird auf ein anderes Produkt umgestellt. Dies ermöglicht die just-in-time-Produktion eines maßgeschneiderten Prepolymers. Die Produktauswahl kann z. B. über einen QR-Code erfolgen, der eine in der Prozessleitführung hinterlegte Rezeptur aufruft.

In einer beispielhaften Ausführungsform des Verfahrens werden die vorgemischten Komponenten (Isocyanate, Polyole und gegebenenfalls weitere Komponenten) über einen Wärmetauscher auf eine vorgegebene Temperatur gebracht und anschließend in einem statischen Mischer als Verweilzeitreaktor umgesetzt. Der Umsatz wird über eine NIR-Sonde erfasst, die mit der Prozessleitführung gekoppelt ist. Die Kopplung kann wiederum auf Reaktionszeit, Reaktionstemperatur und Dosiereinheiten zurückgreifen und diese je nach Produktspezifikation anpassen.

In einer beispielhaften Ausführungsform des Verfahrens werden zum Anfahren einer Lot-Produktion die Polyol-Komponenten und Isocyanat-Komponenten zunächst über die Massedurchflussmesser der Rohstoffdosierstränge im Kreis gepumpt, um Luft aus dem System zu verdrängen und die Massedurchflussmesser zu füllen. Im Anschluss werden zeitgleich die Dosierventile Richtung Mischeinheit geöffnet und die Komponenten im richtigen Rezeptverhältnis zusammengefahren.

In einer beispielhaften Ausführungsform des Verfahrens werden zum Beenden der Lot-Produktion die Dosierventile Richtung Mischeinheit geschlossen und die Dosierung der Rohstoffe gestoppt. Die Anlage wird unter Einhaltung der gewählten Verweilzeit in das jeweilige Gebinde leergefahren, so dass möglichst keine Menge als Abfall in der Anlage verbleibt. Die Anlage kann bei Bedarf im Anschluss mit reinem Isocyanat gespült oder mit anderen Reinigungsmitteln gereinigt werden.

In einer weiteren beispielhaften Ausführungsform des Verfahrens werden Polyol-Komponenten und Isocyanat-Komponenten und ggf. Additive und Katalysatoren in einer Mischvorrichtung zusammengeführt. Die Polyol-Komponenten werden mittels Förderpumpen (z. B. Zahnradpumpen, Schraubenspindelpumpen) aus diversen Lagerbehältern (z. B. Tank, IBC, Fass) ggf. über eine Mischeinrichtung zur Vorvermischung (statische oder dynamische Mischeinheit) und einen Wärmetauscher (wobei Öl-, Wasser-, oder Dampfbeheizung möglich ist) zur Einstellung einer gewünschten Temperatur in eine Mischvorrichtung (statische oder dynamische Mischeinheit) gepumpt. Alternativ können die Polyol-Komponenten auch mit Lager- oder Umgebungstemperatur ohne Nutzung des Wärmetauschers dosiert werden. Die Isocyanat-Komponenten werden ebenfalls aus Lagerbehältern, gegebenenfalls nach einer Vorvermischung in einem Statikmischer und einer Temperierung, in die Mischvorrichtung geleitet, wobei sowohl mehrere Isocyanat-Komponenten vorvermischt als ein Strom oder als mehrere Einzelströme zugeführt werden können, und die Isocyanat-Komponenten sowohl temperiert als auch bei Umgebungstemperatur dosiert werden können. Die Isocyanat-Komponenten werden analog den Polyol-Komponenten über Pumpen gefördert. Zusätzlich zu den Polyol- und Isocyanatkomponenten können je nach Rezeptur auch Additive und Katalysatoren in den Polyol- und/oder Isocyanatstrom eingemischt werden.

Die exakten Dosierströme der Edukte werden über Massedurchflussmesser erfasst und für die Dosierstromregelung zugrunde gelegt. Im Anschluss an die Mischvorrichtung strömt die Isocyanat-Polyol-Mischung kontinuierlich durch einen Wärmetauscher und wird dort auf die gewünschte Starttemperatur der Reaktion gebracht. Dem Wärmetauscher nachgeschaltet befindet sich ein Plug-Flow-Reaktor, um eine gleichmäßige Verweilzeitverteilung einzuhalten. Der Plug-Flow-Reaktor wird nur beim Anfahren auf die gewünschte Starttemperatur der Reaktion gebracht, damit nicht zu viel Reaktionsenergie durch das Erwärmen des Stahls verloren geht. Für die Beheizung kann ein Doppelmantel-Statikmischer mit Öl-, Wasser- oder Dampfbeheizung verwendet werden oder eine elektrische Begleitheizung. Um eine möglichst adiabate Fahrweise im Plug-Flow-Reaktor zu gewährleisten muss er gut isoliert sein.

Nach Verlassen des Plug-Flow-Reaktors wird der Produktstrom zum Kühlen in einen Wärmetauscher gefördert. Auch hier kommen verschiedene Wärmetauschertypen in Frage wie z. B. Rohrbündelwärmetauscher oder Plattenwärmetauscher, sowohl im Gegen- als auch Gleichstrom. Im Anschluss kann das Produkt direkt in Kundengebinde (Fass, IBC), einen Tankzug oder einen Lagertank abgefüllt werden.

Zum Anfahren einer Lot-Produktion werden die Rohstoffe, Polyol-Komponenten und Isocyanat-Komponenten, zunächst über die Massedurchflussmesser der Rohstoffdosierstränge im Kreis gepumpt, um Luft aus dem System zu verdrängen und die Massedurchflussmesser zu füllen. Zeitgleich werden im Anschluss die Dosierventile in Richtung der Mischeinheit vor dem Verweilzeitreaktor geöffnet und die Komponenten im richtigen Rezeptverhältnis zusammengefahren. Zum Beenden der Lot-Produktion werden die Dosierventile in Richtung der Mischeinheit vor dem Verweilzeitreaktor geschlossen und die Dosierung der Rohstoffe gestoppt. Die Anlage wird unter Einhaltung der gewählten Verweilzeit in das jeweilige Gebinde leergefahren, so dass möglichst keine Menge als Abfall in der Anlage verbleibt. Die Anlage kann bei Bedarf im Anschluss mit reinem Isocyanat gespült werden oder auch mit anderen Reinigungsmitteln gereinigt werden.

Die mit dem erfindungsgemäßen Verfahren erhaltenen Produkte zeigen exzellente Lagerstabilitäten und liefern in den entsprechenden Polyurethanformteilen gleiche Eigenschaften wie Polyurethan-Prepolymere, die mit einem herkömmlichen Rührkesselverfahren hergestellt wurden.

Gegenstand der Erfindung ist auch eine Vorrichtung zur kontinuierlichen Herstellung von Polyurethan-Prepolymeren. Die erfindungsgemäße Vorrichtung umfasst a) einen Verweilzeitreaktor mit Pfropfenströmung; b) einen dem Verweilzeitreaktor vorgeschalteten Wärmetauscher; c) mindestens eine Vorrichtung zur Förderung eines Stoffstroms durch den Verweilzeitreaktor; d) mindestens eine Vorrichtung zur periodischen oder kontinuierlichen Bestimmung mindestens einer physikalischen Eigenschaft eines den Verweilzeitreaktor verlassenden Produktstroms; und e) eine Vorrichtung zur Steuerung der Temperatur des Wärmetauschers und der Fördermenge der Vorrichtung zur Förderung eines Stoffstroms durch den Verweilzeitreaktor. In einer Ausführungsform umfasst die Vorrichtung zusätzlich f) einen dem Verweilzeitreaktor nachgeschalteten Wärmetauscher. In einer weiteren Ausführungsform umfasst die Vorrichtung zusätzlich g) mindestens eine dem Verweilzeitreaktor vorgeschaltete Mischvorrichtung, welche in einer Ausführungsform ein statischer Mischer ist. In einer Ausführungsform umfasst die Vorrichtung zusätzlich h) Mittel zur Temperierung der Mischvorrichtung und/oder zur Temperierung von der Mischvorrichtung zugeführten Stoffströmen. In einer Ausführungsform ist der Verweilzeitreaktor ein adiabatischer Verweilzeitreaktor, beispielsweise ein statischer Mischer, der in einer Variante mit einem Doppelmantel als Isolierung versehen ist, oder ein dynamischer Mischer, der in einer Variante mit einem Doppelmantel als Isolierung versehen ist.

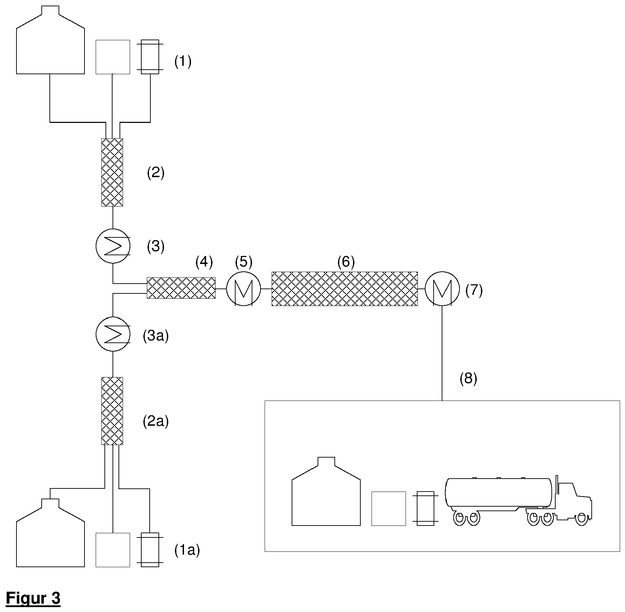

In Figur 3 ist beispielhaft eine erfindungsgemäße Vorrichtung zur kontinuierlichen Herstellung von Polyurethan-Prepolymeren abgebildet. Die Vorrichtung umfasst Lagerbehälter 1, 1a (z. B. Tank, IBC, Fass) für die Edukte; Mischeinrichtungen 2, 2a zur Vorvermischung der Edukte (statische oder dynamische Mischeinheit); Wärmetauscher 3, 3a (z. B. mit Öl-, Wasser-, oder Dampfbeheizung) zur Einstellung einer gewünschten Temperatur der Eduktströme; eine Mischvorrichtung 4 für die Edukte (statische oder dynamische Mischeinheit); einen Wärmetauscher 5 für das Eduktgemisch; einen Plug-Flow-Reaktor 6; einen Wärmetauscher 7 zum Kühlen des Produktstroms; und Produktbehälter 8 (Fass, IBC, Tankzug oder Lagertank).

Gegenstand der Erfindung ist auch ein Computersystem zur Steuerung einer kontinuierlichen Herstellung von Polyurethan-Prepolymeren nach dem erfindungsgemäßen Verfahren. Das Computersystem umfasst mindestens:

- eine Schnittstelleneinheit, die dazu konfiguriert ist, periodisch oder kontinuierlich mindestens eine physikalische Eigenschaft des den Verweilzeitreaktor verlassenden Produkts von dem Verweilzeitreaktor abzurufen und als Eingangsparameter einzulesen,
- einen Prozessor, der dazu konfiguriert ist, die periodisch oder kontinuierlich abgerufene mindestens eine physikalische Eigenschaft des den Verweilzeitreaktor verlassenden Produkts mit einem in einer mit dem Prozessor in kommunikativer Verbindung stehenden Datenbank hinterlegten und abrufbaren vorgegebenen Zielwert der mindestens einen physikalischen Eigenschaft zu vergleichen und bei einer Abweichung von dem vorgegebenen Zielwert die Temperatur und/oder die Flussrate der in den Verweilzeitreaktor eintretenden Edukte und/oder die Flussrate durch den Verweilzeitreaktor und/oder die Temperatur des Verweilzeitreaktors dynamisch durch entsprechende Steuerung anzupassen. In einer Ausführungsform ist der Prozessor dazu konfiguriert, bei einer Abweichung von dem vorgegebenen Zielwert die Temperatur und/oder die Flussrate der in den Verweilzeitreaktor eintretenden Edukte und/oder die Flussrate durch den Verweilzeitreaktor dynamisch durch entsprechende Steuerung anzupassen.

In einer Ausführungsform ist das Computersystem dazu konfiguriert, mit der erfindungsgemäßen Vorrichtung über eine drahtlose und/oder eine drahtgebundene Verbindung gekoppelt zu werden und die mindestens eine physikalische Eigenschaft des den Verweilzeitreaktor verlassenden Produkts und die Temperatur und/oder die Flussrate der in den Verweilzeitreaktor eintretenden Edukte und/oder die Flussrate durch den Verweilzeitreaktor und/oder die Temperatur des Verweilzeitreaktors zumindest teilautomatisch über die Schnittstelleneinheit abzurufen und einzulesen. In einer Ausführungsform ist das Computersystem dazu konfiguriert, bei einer Abweichung von dem vorgegebenen Zielwert die Temperatur und/oder die Flussrate der in den Verweilzeitreaktor eintretenden Edukte und/oder die Flussrate durch den Verweilzeitreaktor dynamisch durch entsprechende Steuerung anzupassen.

In einer weiteren Ausführungsform ist auf dem Prozessor des Computersystems ein selbstlernender Algorithmus zum automatischen Abgleich der mindestens einen physikalischen Eigenschaft des den Verweilzeitreaktor verlassenden Produkts mit dem vorgegebenen Zielwert der mindestens einen physikalische Eigenschaft und in Reaktion darauf zur automatischen Steuerung und dynamischen Anpassung der Temperatur und/oder der Flussrate der in den Verweilzeitreaktor eintretenden Edukte und/oder der Flussrate durch den Verweilzeitreaktor und/oder die Temperatur des Verweilzeitreaktors über die Schnittstelleneinheit implementiert. Der Algorithmus ist dazu konfiguriert, durch die dynamische Anpassung der Temperatur und/oder der Flussrate(n) das erfindungsgemäße Verfahren zur Herstellung von Polyurethan-Prepolymeren zu optimieren.

Gegenstand der Erfindung ist auch ein Computerprogrammprodukt, das, wenn es in eine Speichereinheit einer Recheneinheit, insbesondere eines erfindungsgemäßen Computersystems, geladen ist, und durch mindestens einen Prozessor, insbesondere den Prozessor des erfindungsgemäßen Computersystems, ausgeführt wird, bei einem erfindungsgemäßen Verfahren mindestens eine physikalische Eigenschaft des den Verweilzeitreaktor verlassenden Produkts periodisch oder kontinuierlich abruft und mit einem vorgegebenen Zielwert abgleicht und bei einer Abweichung von dem vorgegebenen Zielwert die Temperatur und/oder die Flussrate der in den Verweilzeitreaktor eintretenden Edukte und/oder die Flussrate durch den Verweilzeitreaktor und/oder die Temperatur des Verweilzeitreaktors dynamisch anpasst. In einer Ausführungsform ist das Computerprogrammprodukt dazu konfiguriert, bei einer Abweichung von dem vorgegebenen Zielwert die Temperatur und/oder die Flussrate der in den Verweilzeitreaktor eintretenden Edukte und/oder die Flussrate durch den Verweilzeitreaktor dynamisch durch entsprechende Steuerung anzupassen.

Gegenstand der Erfindung ist auch ein computerimplementiertes Verfahren zur Steuerung der Herstellung von Polyurethan-Prepolymeren, insbesondere als Teil eines erfindungsgemäßen Verfahrens, das mindestens umfasst:

- Empfangen von Daten mindestens einer physikalischen Eigenschaft eines einen Verweilzeitreaktor verlassenden Produkts in Echtzeit,
- Vergleichen der Daten mit einem in einer Datenbank hinterlegten abrufbaren vorgegebenen Zielwert der mindestens einen physikalischen Eigenschaft, und
- bei einer Abweichung von dem vorgegebenen Zielwert dynamisches Anpassen einer Temperatur und/oder einer Flussrate der in den Verweilzeitreaktor eintretenden Edukte und/oder einer Flussrate durch den Verweilzeitreaktor und/oder die Temperatur des Verweilzeitreaktors durch Steuerung.

In einer Ausführungsform des Verfahrens bei einer Abweichung von dem vorgegebenen Zielwert Temperatur und/oder Flussrate der in den Verweilzeitreaktor eintretenden Edukte und/oder die Flussrate durch den Verweilzeitreaktor dynamisch durch entsprechende Steuerung angepasst.

Beispiele physikalischer Eigenschaften des Produkts sind der NCO-Wert (bestimmt gemäß EN ISO 11909), die Viskosität (gemessen bei 25°C gemäß DIN EN ISO 3219 mit Platte/Kegel-Messgeometrie bei einer Scherrate von 40 1/s), das Molekulargewicht (Zahlenmittel gemäß DIN55672-2, Kalibrierung mit PMMA), die Hydroxylzahl (nach DIN 5342 [1971-12]) oder die Farbzahl (Hazen-Farbzahl nach ISO 6271 oder Gardner-Farbzahl nach ISO 4630).

**Beispiele**

**Einsatzstoffe**

| | |
|---|---|
| Isocyanat 1: | 4,4'-Diphenylmethandiisocyanat (4,4'-MDI), Molmasse 250.26 g/mol, NCO 33.5% (Lupranat® ME, BASF SE); |
| Isocyanat 2 | Carbodiimid-modifiziertes 4,4'-Diphenylmethandiisocyanat (4,4'-MDI), NCO: 29.5% (Lupranat® MM 103, BASF SE); |
| Isocyanat 3: | 1 :1-Mischung aus 4,4'-Diphenylmethandiisocyanat (4,4'-MDI) und 2,4'-Diphenylmethandiisocyanat (2,4'-MDI), Molmasse 250.26 g/mol, NCO 33.5% (Lupranat® MI, BASF SE); |
| Isocyanat 4: | polymeres Isocyanat bestehend aus 2,2'-, 2,4'- und 4,4'-Diphenylmethandiisocyanat (MDI), NCO: 31.5% (Lupranat® M20S, BASF SE); |
| Polyol 1: | Polyetherol mit einer OH-Zahl von etwa 104, aufgebaut aus Propylenglykol und Propylenoxid (MW: ca. 1070 g/mol); |
| Polyol 2 | Dipropylenglykol (DPG) mit einer OH-Zahl von 840 (MW: 134 g/mol); |
| Polyol 3 | Tripropylenglykol (TPG) mit einer OH-Zahl von 582 (MW: 183 g/mol); |
| Polyol 4: | Polyetherol mit einer OH-Zahl von etwa 55, aufgebaut aus Propylenglykol und Propylenoxid (MW: ca. 2000 g/mol); |
| Polyol 5: | Trimethylolpropan (TMP) mit einer OH-Zahl von 1235 (MW: 134 g/mol); |

(fortgesetzt)

| | |
|---|---|
| Polyol 6: | Polytetrahydrofuran (pTHF; Polytetramethylenetherglykol, PTMEG) mit einer OH-Zahl von etwa 56 (MW: ca. 2000 g/mol); |
| Polyol 7: | Polyesterol mit einer OH-Zahl von etwa 60, aufgebaut aus Adipinsäure, Monoethylenglykol, Diethylenglykol und Glycerin (MW: ca. 2500 g/mol); |
| Polyol 8 | Polyetherol mit einer OH-Zahl von etwa 30, aufgebaut aus Propylenglykol, Propylenoxid und Ethylenoxid (MW: ca. 3400 g/mol); |
| Polyol 9 | Polyetherol mit einer OH-Zahl von etwa 27, aufgebaut aus Glycerin, Propylenoxid und Ethylenoxid (MW: ca. 5200 g/mol); |
| Polyol 10 | Polyetherol mit einer OH-Zahl von etwa 28, aufgebaut aus Glycerin, Propylenoxid und Ethylenoxid (MW: ca. 5400 g/mol); |
| Polyol 11 | Polyetherol mit einer OH-Zahl von etwa 250, aufgebaut aus Dimethylaminopropylamin und Propylenoxid (MW: ca. 450 g/mol); |
| Polyol 12 | Polyetherol mit einer OH-Zahl von etwa 630, aufgebaut aus Pentaerythrit und Ethylenoxid (MW: ca. 360 g/mol); |
| Polyol 13 | Polyetherol mit einer OH-Zahl von etwa 42, aufgebaut aus Glycerin, Propylenoxid und Ethylenoxid (MW: ca. 3500 g/mol) |
| Kettenverlängerer | 1,4-Butandiol; |
| Additiv 1 | Diethylenglykol-bis-chlorformiat; |
| Additiv 2 | Silikon-Stabilisator (DABCO DC 193, Evonik Industries AG); |
| Additiv 3 | Schwarzpaste (Bayflex® Schwarzpaste N, Covestro AG); |
| Additiv 4 | Silikon-Stabilisator (Dow Corning® 57 Additive, Dow Corning Corp.); |
| Additiv 5 | Emulgator auf Basis eines Halbesters der Maleinsäure, Olefincopolymer und Bis(2-propylheptyl)phthalat; |
| Additiv 6 | Wasser; |
| Katalysator 1 | Triethylendiamin blockiert mit Sebacinsäure; |
| Katalysator 2 | Dimethylethanolamin; |
| Katalysator 3 | Bis-(2-dimethylaminoethyl)ether; |
| Katalysator 4 | Kaliumacetat in Monoethylenglykol; |
| Katalysator 5 | N,N,N-Trimethyl-N-hydroxyethyl-bis(aminoethylether) |

Alle Prozentangaben bedeuten Gewichtsprozent, soweit nicht explizit anders angegeben.

### Bestimmung physikalischer Eigenschaften

Die folgenden Eigenschaften der erhaltenen Prepolymeren bzw. Polyurethane wurden nach den folgenden Verfahren bestimmt:

### Bestimmung des Molekulargewichts:

Das zahlenmittlere Molekulargewicht wurde gemäß DIN 55672-2 ermittelt. Hierbei erfolgte eine Kalibrierung mit PMMA.

### NCO-Wert-Bestimmung:

Die Bestimmung des NCO-Gehalts wurde gemäß EN ISO 11909 durchgeführt: primäre und sekundäre Amine reagieren mit Isocyanaten zu substituierten Harnstoffen. Diese Reaktion verläuft quantitativ in einem Überschuss von Amin. Nach Ablauf der Reaktion wird das überschüssige Amin mit Salzsäure potentiometrisch zurücktitriert.

### Messung der Hydroxylzahl:

Die Hydroxylzahlen wurden nach DIN 53240 (1971-12) bestimmt.

**Viskositätsbestimmung:**

Die Viskosität wurde, wenn nicht anders angegeben, bei 25 °C gemäß DIN EN ISO 3219 (1994) mit einem Brookfield CAP2000 mit Platte/Kegel-Messgeometrie (PK100; z. B. unter Verwendung eines Kegels PK 1 1° mit Durchmesser von 28 mm und Kegelwinkel: 1°) bei einer Scherrate von 40 1/s bestimmt.

**Mechanische Untersuchungen:**

Die Eigenschaften der erhaltenen Polyurethane wurden nach den genannten Verfahren bestimmt:

| | |
|---|---|
| Dichte: | DIN EN ISO 1183-1, A |
| Härte (Shore A/D): | DIN ISO 7619-1 oder ASTM D2240 |
| Zugfestigkeit/Reißdehnung: | DIN 53504 |
| Weiterreißwiderstand: | DIN ISO 34-1, B (b) |
| Rückprallelastizität | DIN 53512 |
| Druckverformungsrest | ASTM D395 |

Die Glasübergangstemperatur Tg wurde mittels dynamischer Differenzkalorimetrie bestimmt (DIN EN ISO 11357-1 mit 20 K/min).

**Herstellung von Prepolymeren**

**Herstellverfahren 1 für PU(Polvurethan)-Prepolvmere (Vergleichsbeispiel)**

Das jeweilige Isocyanat wurde mit Additiv 1 bei 50°C in einem 50-kg Reaktor mit Stickstoffbeschleierung und Rührer vorgelegt und das jeweilige Polyol wurde bei dieser Temperatur hinzugefügt. Das Reaktionsgemisch wurde auf 70-80°C erhitzt. Das Reaktionsgemisch wurde 2 Stunden lang bei 80°C gerührt und anschließend ohne weitere Behandlung bei Temperaturen zwischen RT (=Raumtemperatur) und 60°C in ein Lagergefäß abgepumpt.

**Herstellverfahren 2 für PU Prepolymere (erfindungsgemäß)**

Das jeweilige Isocyanat (bzw. eine Mischung von Isocyanaten) wurde mit Additiv 1 bei 50°C in einem Lagertank zur finalen Isocyanatkomponente vermischt und durch eine kurze statische Mischereinheit mit dem jeweiligen Polyol (bzw. einer Poylolmischung) vorvermischt. Diese Reaktivmischung wurde über einen Plattenwärmetauscher auf die entsprechende Reaktionstemperatur gebracht und im Anschluss zum adiabaten Verweilzeitreaktor gepumpt. Als adiabater Verweilzeitreaktor mit Pfropfenströmung wurde ein statischer Mischer mit Doppelmantel eingesetzt.
Die exakten Dosierströme der Edukte wurden über Massedurchflussmesser erfasst und der Dosierstromregelung zugrunde gelegt. Die Reaktionsmischung wurde innerhalb von 10 Minuten im Rohrreaktor bzw. Verweilzeitreaktor zum finalen Produkt umgesetzt und anschließend durch einen weiteren Plattenwärmetauscher auf ca. 60°C abgekühlt und in ein geeignetes Lagergebinde überführt. Der Reaktionsverlauf wurde mittels einer NIR-Sonde verfolgt (die NIR-Sonde befand sich am Ende des Verweilzeitreaktors hinter dem Plattenwärmetauscher) und die Starttemperatur gemäß Figur 1 und 2 angepasst.
Die Daten der erfindungsgemäßen Herstellbeispiele und der Vergleichsbeispiele sind in den nachfolgenden Tabellen 1-4 zusammengefasst.

**Tabelle 1**

| Prepolymer Nr. | 1 | 2a | 2b | 2c |
|---|---|---|---|---|
| | Vergleich 1a | Beispiel 1a | Vergleich 1b | Beispiel 1b |
| Isocyanat 1 [Gew.-%] | 73,9 | 73,9 | 73,9 | 73,9 |
| Isocyanat 2 [Gew.-%] | 4,2 | 4,2 | 4,2 | 4,2 |
| Isocyanat 3 [Gew.-%] | | | | |
| Polyol 1 [Gew.-%] | 14,4 | 14,4 | 14,4 | 14,4 |
| Polyol 2 [Gew.-%] | 5,0 | 5,0 | 5,0 | 5,0 |

(fortgesetzt)

| Prepolymer Nr. | 1 | 2a | 2b | 2c |
|---|---|---|---|---|
| | Vergleich 1a | Beispiel 1a | Vergleich 1b | Beispiel 1b |
| Polyol 3 [Gew.-%] | 2,5 | 2,5 | 2,5 | 2,5 |
| Polyol 4 [Gew.-%] | | | | |
| Additiv 1 [Gew.-%] | 0,02 | 0,02 | 0,02 | 0,02 |
| Reaktions-/ Starttemperatur [°C] | 80 | 60 | 80 | 100 |
| Flussrate [kg/min] | - | 2 | 2 | 2 |
| Reaktions-/ Verweilzeit [min] | 120 | 10 | 120 | 10 |
| NCO [%] | 20,4 | 21,1 | 20,2 | 19,8 |

**Tabelle 2**

| Prepolymer Nr. | 1 | 2d | 3 | 4 |
|---|---|---|---|---|
| | Vergleich 1a | Beispiel 1c | Vergleich 2 | Beispiel 2 |
| Isocyanat 1 [Gew.-%] | 73,9 | 73,9 | | |
| Isocyanat 2 [Gew.-%] | 4,2 | 4,2 | | |
| Isocyanat 3 [Gew.-%] | | | 36,2 | 36,2 |
| Polyol 1 [Gew.-%] | 14,4 | 14,4 | | |
| Polyol 2 [Gew.-%] | 5,0 | 5,0 | | |
| Polyol 3 [Gew.-%] | 2,5 | 2,5 | | |
| Polyol 4 [Gew.-%] | | | 63,7 | 63,7 |
| Additiv 1 [Gew.-%] | 0,02 | 0,02 | 0,01 | 0,01 |
| Reaktions-/ Starttemperatur [°C] | 80 | 80 | 80 | 120 |
| Flussrate [kg/min] | - | 2 | - | 2 |
| Reaktions-/ Verweilzeit [min] | 120 | 10 | 120 | 10 |
| NCO [%] | 20,4 | 20,2 | 9,4 | 9,7 |

**Tabelle 3**

| Prepolymer Nr. | 5 | 6 | 7 | 8 |
|---|---|---|---|---|
| | Vergleich 3 | Beispiel 3 | Vergleich 4 | Beispiel 4 |
| Isocyanat 1 [Gew.-%] | 33,9 | 33,9 | | |
| Isocyanat 2 [Gew.-%] | 59,5 | 59,5 | | |
| Isocyanat 3 [Gew.-%] | | | 26,5 | 26,5 |
| Polyol 5 [Gew.-%] | 6,6 | 6,6 | | |
| Polyol 6 [Gew.-%] | | | 73,5 | 73,5 |
| Additiv 1 [Gew.-%] | 0,04 | 0,04 | 0,02 | 0,02 |
| Reaktions-/ Starttemperatur [°C] | 80 | 90 | 80 | 100 |
| Flussrate [kg/min] | - | 2 | - | 2 |
| Reaktions-/ Verweilzeit [min] | 120 | 10 | 120 | 10 |

(fortgesetzt)

| Prepolymer Nr. | 5 | 6 | 7 | 8 |
|---|---|---|---|---|
| | Vergleich 3 | Beispiel 3 | Vergleich 4 | Beispiel 4 |
| NCO [%] | 26,0 | 25,9 | 5,8 | 5,8 |

**Tabelle 4**

| Prepolymer Nr. | 9 | 10 |
|---|---|---|
| | Vergleich 5 | Beispiel 5 |
| Isocyanat 2 [Gew.-%] | 67,0 | 67,0 |
| Isocyanat 3 [Gew.-%] | 6,0 | 6,0 |
| Polyol 7 [Gew.-%] | 27,0 | 27,0 |
| Additiv 1 [Gew.-%] | 0,003 | 0,003 |
| Reaktions-/Starttemperatur [°C] | 85 | 100 |
| Flussrate [kg/min] | - | 2 |
| Reaktions-/Verweilzeit [min] | 100 | 10 |
| NCO [%] | 22,8 | 22,4 |

**Herstellung von Formteilen mit ausgewählten PU Prepolymeren**

Die Herstellung der Polyurethanformteile erfolgte durch die Umsetzung der jeweiligen Polyolkomponente (**A**) mit der entsprechenden Isocyanatkomponente (**B**). Die Daten der erfindungsgemäßen Herstellbeispiele und der Vergleichsbeispiele sind in den nachfolgenden Tabellen 5 und 6 zusammengefasst.

**Tabelle 5.** Anwendungstests (Formweichschaum) mit Prepolymer 1 (Vergleich) und Prepolymer 2d (erfindungsgemäß).

| | | | Vergleich 6 | Beispiel 6 |
|---|---|---|---|---|
| **A** | | Polyol 8 [Gew.-%] | 60,1 | 60,1 |
| | | Polyol 9 [Gew.-%] | 25,6 | 25,6 |
| | | Kettenverlängerer [Gew.-%] | 9,8 | 9,8 |
| | | Katalysator 1 [Gew.-%] | 1,5 | 1,5 |
| | | Katalysator 2 [Gew.-%] | 1,0 | 1,0 |
| | | Katalysator 3 [Gew.-%] | 0,3 | 0,3 |
| | | Additiv 2 [Gew.-%] | 0,8 | 0,8 |
| | | Additiv 6 [Gew.-%] | 0,2 | 0,2 |
| | | Additiv 4 [Gew.-%] | 0,7 | 0,7 |
| **B** | | Prepolymer 1 [Gew.-%] | 100 | |
| | | Prepolymer 2d [Gew.-%] | | 100 |
| | | Härte [Shore A] | 53 | 54 |
| | | Weiterreißwiderstand [N/mm] | 7,7 | 9,1 |
| | | Zugfestigkeit [MPa] | 4,4 | 4,3 |
| | | Reißdehnung [%] | 408 | 441 |
| | | Rückprallelastizität [%] | 26 | 28 |

**Tabelle 6.** Anwendungstests (Formweichschaum) mit Prepolymer 5 (Vergleich) und Prepolymer 6 (erfindungsgemäß).

|  |  | Vergleich 7 | Beispiel 7 |
|---|---|---|---|
| A | Polyol 10 [Gew.-%] | 86,8 | 86,8 |
|  | Polyol 11 [Gew.-%] | 1,5 | 1,5 |
|  | Polyol 12 [Gew.-%] | 7,1 | 7,1 |
|  | Polyol 13 [Gew.-%] | 0,7 | 0,7 |
|  | Katalysator 4 [Gew.-%] | 0,3 | 0,3 |
|  | Katalysator 5 [Gew.-%] | 0,3 | 0,3 |
|  | Additiv 5 [Gew.-%] | 0,3 | 0,3 |
|  | Additiv 3 [Gew.-%] | 0,3 | 0,3 |
|  | Additiv 6 [Gew.-%] | 2,7 | 2,7 |
| B | Isocyanat 4 [Gew.-%] | 30,0 | 30,0 |
|  | Prepolymer 5 [Gew.-%] | 70,0 |  |
|  | Prepolymer 6 [Gew.-%] |  | 70,0 |
|  | Dichte [g/L] | 119 | 118 |
|  | Druckverformungsrest [%] | 38,1 | 40,2 |
|  | Druck bei 40% Verformung [kPa] | 77,6 | 75,1 |
|  | Zugfestigkeit [kPa] | 400 | 411 |
|  | Reißdehnung [%] | 45 | 50 |

Bezugszeichenliste

| | |
|---|---|
| 1, 1a | Lagerbehälter für Edukte (z. B. Tank, IBC, Fass) |
| 2, 2a | Mischeinrichtung zur Vorvermischung (statisch oder dynamisch) |
| 3, 3a | Wärmetauscher (z. B. mit Öl-, Wasser-, oder Dampfbeheizung) |
| 4 | Mischvorrichtung (statische oder dynamische Mischeinheit) |
| 5 | Wärmetauscher |
| 6 | Plug-Flow-Reaktor |
| 7 | Wärmetauscher |
| 8 | Produktbehälter (Fass, IBC, Tankzug oder Lagertank) |

**Patentansprüche**

**1.** Lernendes kontinuierliches Verfahren zur Herstellung von Polyurethan-Prepolymeren, umfassend die Umsetzung von

a) Di- oder Polyisocyanaten mit
b) Verbindungen mit gegenüber Isocyanatgruppen reaktiven Wasserstoffatomen, gegebenenfalls in Gegenwart von
c) Katalysatoren, Additiven, Hilfs- und/oder Zusatzstoffen

in einem Verweilzeitreaktor mit Pfropfenströmung, wobei der Wert mindestens einer physikalischen Eigenschaft des den Verweilzeitreaktor verlassenden Produkts periodisch oder kontinuierlich überprüft wird und bei einer Abweichung von einem vorgegebenen Zielwert die Temperatur und/oder die Flussrate der in den Verweilzeitreaktor eintretenden Edukte und/oder die Flussrate durch den Verweilzeitreaktor und/oder die Temperatur des Verweil-

EP 3 947 495 B1

zeitreaktors angepasst werden, wobei die Prozessdaten und Produktdaten sowie gegebenenfalls externe Daten einer Datenverarbeitung zugeführt werden, in der eine Datenanalyse erfolgt, und auf Basis der Datenanalyse durch Optimierungsalgorithmen zur Parameteranpassung neue optimierte Parameter berechnet werden, die dann zur Steuerung des Verfahrens eingesetzt werden.

**2.** Verfahren nach Anspruch 1, bei dem in dem Verweilzeitreaktor adiabate Reaktionsbedingungen eingestellt werden, und bei dem bei einer Abweichung von dem vorgegebenen Zielwert die Temperatur und/oder die Flussrate der in den Verweilzeitreaktor eintretenden Edukte und/oder die Flussrate durch den Verweilzeitreaktor angepasst werden.

**3.** Verfahren nach Ansprüche 1 oder 2, bei dem die Flussrate durch den Verweilzeitreaktor über die Steuerung der Fördermenge der Edukte in den Verweilzeitreaktor eingestellt wird.

**4.** Verfahren nach einem der Ansprüche 1 bis 3, bei dem die Zusammensetzung des den Verweilzeitreaktor verlassenden Produkts mittels NIR-Spektroskopie ermittelt wird.

**5.** Verfahren nach einem der Ansprüche 1 bis 4, bei dem die in den Verweilzeitreaktor eintretenden Edukte eine Temperatur im Bereich von 40°C bis 150°C aufweisen.

**6.** Verfahren nach einem der Ansprüche 1 bis 5, bei dem die Verweilzeit in dem Verweilzeitreaktor 5 bis 15 Minuten beträgt.

**7.** Vorrichtung zur kontinuierlichen Herstellung von Polyurethan-Prepolymeren, umfassend

a) einen Verweilzeitreaktor mit Pfropfenströmung;
b) einen dem Verweilzeitreaktor vorgeschalteten Wärmetauscher;
c) mindestens eine Vorrichtung zur Förderung eines Stoffstroms durch den Verweilzeitreaktor;
d) mindestens eine Vorrichtung zur periodischen oder kontinuierlichen Bestimmung mindestens einer physikalischen Eigenschaft eines den Verweilzeitreaktor verlassenden Produktstroms;
e) eine Vorrichtung zur Steuerung der Temperatur des Wärmetauschers und der Fördermenge der mindestens einen Vorrichtung zur Förderung eines Stoffstroms durch den Verweilzeitreaktor.

**8.** Vorrichtung nach Anspruch 7, zusätzlich umfassend f) einen dem Verweilzeitreaktor nachgeschalteten Wärmetauscher.

**9.** Vorrichtung nach Anspruch 7 oder 8, zusätzlich umfassend g) mindestens eine dem Verweilzeitreaktor vorgeschaltete Mischvorrichtung.

**10.** Vorrichtung nach Anspruch 9, zusätzlich umfassend h) Mittel zur Temperierung der Mischvorrichtung und/oder zur Temperierung von der Mischvorrichtung zugeführten Stoffströmen.

**11.** Computersystem zur Steuerung einer kontinuierlichen Herstellung von Polyurethan-Prepolymeren gemäß einem Verfahren nach einem der Ansprüche 1 bis 6, das mindestens umfasst:

- eine Schnittstelleneinheit, die dazu konfiguriert ist, periodisch oder kontinuierlich mindestens eine physikalische Eigenschaft des den Verweilzeitreaktor verlassenden Produkts von dem Verweilzeitreaktor abzurufen und als Eingangsparameter einzulesen,
- einen Prozessor, der dazu konfiguriert ist, die periodisch oder kontinuierlich abgerufene mindestens eine physikalische Eigenschaft des den Verweilzeitreaktor verlassenden Produkts mit einem in einer mit dem Prozessor in kommunikativer Verbindung stehenden Datenbank hinterlegten und abrufbaren vorgegebenen Zielwert der mindestens einen physikalischen Eigenschaft zu vergleichen und bei einer Abweichung von dem vorgegebenen Zielwert die Temperatur und/oder die Flussrate der in den Verweilzeitreaktor eintretenden Edukte und/oder die Flussrate durch den Verweilzeitreaktor und/oder die Temperatur des Verweilzeitreaktors dynamisch durch entsprechende Steuerung anzupassen.

**12.** Computersystem nach Anspruch 11 das dazu konfiguriert ist, mit der Vorrichtung nach einem der Ansprüche 7 bis 10 über eine drahtlose und/oder eine drahtgebundene Verbindung gekoppelt zu werden und die mindestens eine physikalische Eigenschaft des den Verweilzeitreaktor verlassenden Produkts und die Temperatur und/oder die Flussrate der in den Verweilzeitreaktor eintretenden Edukte und/oder die Flussrate durch den Verweilzeitreaktor und/oder die Temperatur des Verweilzeitreaktors zumindest teilautomatisch über die Schnittstelleneinheit abzurufen und einzulesen.

13. Computersystem nach Anspruch 11 oder 12, bei dem auf dem Prozessor ein selbstlernender Algorithmus zum automatischen Abgleich der mindestens einen physikalischen Eigenschaft des den Verweilzeitreaktor verlassenden Produkts mit dem vorgegebenen Zielwert der mindestens einen physikalischen Eigenschaft und in Reaktion darauf zur automatischen Steuerung und dynamischen Anpassung der Temperatur und/oder der Flussrate der in den Verweilzeitreaktor eintretenden Edukte und/oder der Flussrate durch den Verweilzeitreaktor und/oder der Temperatur des Verweilzeitreaktors über die Schnittstelleneinheit implementiert ist, wobei der Algorithmus dazu konfiguriert ist, durch die dynamische Anpassung der Temperatur(en) und/oder der Flussrate(n) das Verfahren zur Herstellung von Polyurethan-Prepolymeren zu optimieren.

14. Computerprogrammprodukt, das, wenn es in eine Speichereinheit einer Recheneinheit, insbesondere eines Computersystems nach einem der Ansprüche 11 bis 13 geladen ist, und durch mindestens einen Prozessor, insbesondere den Prozessor des Computersystems nach einem der Ansprüche 11 bis 13 ausgeführt wird, bei einem Verfahren nach einem der Ansprüche 1 bis 6 mindestens eine physikalische Eigenschaft des den Verweilzeitreaktor verlassenden Produkts periodisch oder kontinuierlich abruft und mit einem vorgegebenen Zielwert abgleicht und bei einer Abweichung von dem vorgegebenen Zielwert die Temperatur und/oder die Flussrate der in den Verweilzeitreaktor eintretenden Edukte und/oder die Flussrate durch den Verweilzeitreaktor und/oder die Temperatur des Verweilzeitreaktors dynamisch anpasst.

15. Computerimplementiertes Verfahren zur Steuerung der Herstellung von Polyurethan-Prepolymeren als Teil eines Verfahrens nach einem der Ansprüche 1 bis 6, das mindestens umfasst:

- Empfangen von Daten mindestens einer physikalischen Eigenschaft eines einen Verweilzeitreaktor verlassenden Produkts in Echtzeit,
- Vergleichen der Daten mit einem in einer Datenbank hinterlegten abrufbaren vorgegebenen Zielwert der mindestens einen physikalischen Eigenschaft, und
- bei einer Abweichung von dem vorgegebenen Zielwert dynamisches Anpassen einer Temperatur und/oder einer Flussrate der in den Verweilzeitreaktor eintretenden Edukte und/oder einer Flussrate durch den Verweilzeitreaktor und/oder einer Temperatur des Verweilzeitreaktors durch Steuerung.

## Claims

1. A learning continuous process for producing polyurethane prepolymers, comprising reaction of

    a) di- or polyisocyanates with
    b) compounds having isocyanate-reactive hydrogen atoms, optionally in the presence of
    c) catalysts, additives, auxiliary and/or added substances

    in a residence time reactor with plug flow, wherein the value of at least one physical property of the product leaving the residence time reactor is periodically or continuously checked and in the event of a deviation from a predetermined target value the temperature and/or the flow rate of the reactants entering the residence time reactor and/or the flow rate through the residence time reactor and/or the temperature of the residence time reactor are adapted, wherein the process data and product data and optionally external data are sent to a data processing in which a data analysis is carried out and on the basis of the data analysis using optimization algorithms for parameter adaptation new optimized parameters are calculated which are then used to control the process.

2. The process according to claim 1, wherein adiabatic reaction conditions are established in the residence time reactor, and wherein in the event of a deviation from the predetermined target value the temperature and/or the flow rate of the reactants entering the residence time reactor and/or the flow rate through the residence time reactor are adapted.

3. The process according to claim 1 or 2, wherein the flow rate through the residence time reactor is adjusted by controlling the conveying amount of the reactants into the residence time reactor.

4. The process according to any of claims 1 to 3, wherein the composition of the product leaving the residence time reactor is determined by NIR spectroscopy.

5. The process according to any of claims 1 to 4, wherein the reactants entering the residence time reactor have a temperature in the range from 40°C to 150°C.

6. The process according to any of claims 1 to 5, wherein the residence time in the residence time reactor is 5 to 15 minutes.

7. An apparatus for continuous production of polyurethane prepolymers, comprising

   a) a residence time reactor with plug flow;
   b) a heat exchanger connected upstream of the residence time reactor;
   c) at least one apparatus for conveying a material flow through the residence time reactor;
   d) at least one apparatus for periodic or continuous determination of at least one physical property of a product stream leaving the residence time reactor;
   e) an apparatus for controlling the temperature of the heat exchanger and the conveying amount of the at least one apparatus for conveying a material stream through the residence time reactor.

8. The apparatus according to claim 7, additionally comprising f) a heat exchanger connected downstream of the residence time reactor.

9. The apparatus according to claim 7 or 8, additionally comprising g) at least one mixing apparatus arranged upstream of the residence time reactor.

10. The apparatus according to claim 9, additionally comprising h) means for temperature-controlling the mixing apparatus and/or for temperature-controlling material streams supplied to the mixing apparatus.

11. A computer system for controlling a continuous production of polyurethane prepolymers by a process according to any of claims 1 to 6, comprising at least:

    - an interface unit which is configured to periodically or continuously retrieve from the residence time reactor at least one physical property of the product leaving the residence time reactor and to input it as an input parameter,
    - a processor which is configured to compare the periodically or continuously retrieved at least one physical property of the product leaving the residence time reactor with a predetermined target value of the at least one physical property stored and retrievable in a database in communicative connection with the processor and in the event of a deviation from the predetermined target value to dynamically adapt the temperature and/or the flow rate of the reactants entering the residence time reactor and/or the flow rate through the residence time reactor and/or the temperature of the residence time reactor through appropriate control.

12. The computer system according to claim 11 which is configured to be linked to the apparatus according to any of claims 7 to 10 via a wireless and/or a wired connection and to at least semi-automatically via the interface unit retrieve and input the at least one physical property of the product leaving the residence time reactor and the temperature and/or the flow rate of the reactants entering the residence time reactor and/or the flow rate through the residence time reactor and/or the temperature of the residence time reactor.

13. The computer system according to claim 11 or 12, wherein the processor has implemented on it a self-learning algorithm for automatic comparison of the at least one physical property of the product leaving the residence time reactor with the predetermined target value of the at least one physical property and in reaction thereto for automatic control and dynamic adaptation of the temperature and/or the flow rate of the reactants entering the residence time reactor and/or the flow rate through the residence time reactor and/or the temperature of the residence time reactor via the interface unit, wherein the algorithm is configured to optimize the process for producing polyurethane prepolymers by dynamic adaptation of the temperature(s) and/or the flow rate(s).

14. A computer program product which when loaded into a storage unit of a processing unit, in particular of a computer system according to any of claims 11 to 13, and executed by at least one processor, in particular the processor of the computer system according to any of claims 11 to 13, in a process according to any of claims 1 to 6 periodically or continuously retrieves at least one physical property of the product leaving the residence time reactor and compares it with a predetermined target value and in the event of a deviation from the predetermined target value dynamically adapts the temperature and/or the flow rate of the reactants entering the residence time reactor and/or the flow rate through the residence time reactor and/or the temperature of the residence time reactor.

**15.** A computer-implemented method for controlling the production of polyurethane prepolymers, as part of a process according to any of claims 1 to 6, comprising at least:

- receiving data of at least one physical property of a product leaving a residence time reactor in real time,
- comparing the data with a predetermined target value of the at least one physical property stored and retrievable in a database, and
- in the event of a deviation from the predetermined target value, dynamically adapting a temperature and/or a flow rate of the reactants entering the residence time reactor and/or a flow rate through the residence time reactor and/or a temperature of the residence time reactor through control.

**Revendications**

**1.** Procédé continu apprenant pour la préparation de prépolymères de polyuréthane, comprenant la transformation

a) de diisocyanates ou polyisocyanates avec
b) des composés comportant des atomes d'hydrogène réactifs envers des groupes isocyanate, éventuellement en présence
c) de catalyseurs, d'additifs, de substances auxiliaires et/ou d'adjuvants

dans un réacteur à temps de séjour à écoulement piston, la valeur d'au moins une propriété physique du produit sortant du réacteur à temps de séjour étant contrôlée périodiquement ou en continu et, lors d'un écart par rapport à une valeur cible prédéfinie, la température et/ou le débit des éduits entrant dans le réacteur à temps de séjour et/ou le débit à travers le réacteur à temps de séjour et/ou la température du réacteur à temps de séjour pouvant être adaptés, les données de processus et les données de produit ainsi qu'éventuellement des données externes étant soumises à un traitement de données, dans lequel une analyse de données est réalisée, et de nouveaux paramètres optimisés étant calculés sur la base de l'analyse de données par des algorithmes d'optimisation pour l'adaptation de paramètres, qui sont ensuite utilisés pour la commande du procédé.

**2.** Procédé selon la revendication 1, dans lequel, dans le réacteur à temps de séjour, des conditions de réaction adiabatiques sont adaptées, et dans lequel, lors d'un écart par rapport à la valeur cible prédéfinie, la température et/ou le débit des éduits entrant dans le réacteur à temps de séjour et/ou le débit à travers le réacteur à temps de séjour sont adaptés.

**3.** Procédé selon la revendication 1 ou 2, dans lequel le débit à travers le réacteur à temps de séjour est adapté par le biais de la commande du débit d'alimentation des éduits dans le réacteur à temps de séjour.

**4.** Procédé selon l'une quelconque des revendications 1 à 3, dans lequel la composition du produit sortant du réacteur à temps de séjour est déterminée par spectroscopie NIR.

**5.** Procédé selon l'une quelconque des revendications 1 à 4, dans lequel les éduits entrant dans le réacteur à temps de séjour présentent une température dans la plage de 40 °C à 150 °C.

**6.** Procédé selon l'une quelconque des revendications 1 à 5, dans lequel le temps de séjour dans le réacteur à temps de séjour est de 5 à 15 minutes.

**7.** Dispositif de préparation continue de prépolymères de polyuréthane, comprenant

a) un réacteur à temps de séjour à écoulement piston ;
b) un échangeur de chaleur en amont du réacteur à temps de séjour ;
c) au moins un dispositif pour l'acheminement d'un flux de matière à travers le réacteur à temps de séjour ;
d) au moins un dispositif de détermination périodique ou continue d'au moins une propriété physique d'un flux de produit sortant du réacteur à temps de séjour ;
e) un dispositif de commande de la température de l'échangeur de chaleur et du débit d'alimentation de l'au moins un dispositif d'acheminement d'un flux de matière à travers le réacteur à temps de séjour.

**8.** Dispositif selon la revendication 7, comprenant de plus f) un échangeur de chaleur en aval du réacteur à temps de séjour.

**EP 3 947 495 B1**

**9.** Dispositif selon la revendication 7 ou 8, comprenant de plus g) au moins un dispositif de mélange en amont du réacteur à temps de séjour.

**10.** Dispositif selon la revendication 9, comprenant de plus h) un moyen de tempérage du dispositif de mélange et/ou de tempérage de flux de matière alimentés au dispositif de mélange.

**11.** Système informatique de commande d'une préparation continue de prépolymères de polyuréthane selon un procédé selon l'une quelconque des revendications 1 à 6, qui comprend au moins :

- une unité d'interface qui est configurée pour obtenir du réacteur à temps de séjour périodiquement ou en continu au moins une propriété physique du produit sortant du réacteur à temps de séjour et pour la lire en tant que paramètre d'entrée,
- un processeur qui est configuré pour comparer l'au moins une propriété physique du produit sortant du réacteur à temps de séjour, obtenue périodiquement ou en continu, avec une valeur cible prédéfinie de l'au moins une propriété physique stockée dans une base de données se trouvant en liaison communicante avec le processeur et consultable et, lors d'un écart par rapport à la valeur cible prédéfinie, pour adapter dynamiquement la température et/ou le débit des éduits entrant dans le réacteur à temps de séjour et/ou le débit à travers le réacteur à temps de séjour et/ou la température du réacteur à temps de séjour par une commande correspondante.

**12.** Système informatique selon la revendication 11 qui est configuré pour être couplé au dispositif selon l'une quelconque des revendications 7 à 10 par le biais d'une liaison sans fil et/ou d'une liaison filaire, et pour obtenir et lire au moins partiellement automatiquement l'au moins une propriété physique du produit sortant du réacteur à temps de séjour et la température et/ou le débit des éduits entrant dans le réacteur à temps de séjour et/ou le débit à travers le réacteur à temps de séjour et/ou la température du réacteur à temps de séjour par le biais de l'unité d'interface

**13.** Système informatique selon la revendication 11 ou 12, dans lequel un algorithme auto-apprenant est mis en œuvre sur le processeur pour la comparaison automatique de l'au moins une propriété physique du produit sortant du réacteur à temps de séjour avec la valeur cible prédéfinie de l'au moins une propriété physique et, en réponse à ceci, pour la commande automatique et l'adaptation dynamique de la température et/ou du débit des éduits entrant dans le réacteur à temps de séjour et/ou du débit à travers le réacteur à temps de séjour et/ou de la température du réacteur à temps de séjour par l'unité d'interface, dans lequel l'algorithme est configuré pour optimiser le procédé de préparation de prépolymères de polyuréthane par l'adaptation dynamique de la (des) température(s) et/ou du (des) débit(s).

**14.** Produit de programme informatique qui lorsqu'il est chargé dans une unité de mémoire d'une unité de calcul, en particulier d'un système informatique selon l'une quelconque des revendications 11 à 13, et est exécuté par au moins un processeur, en particulier le processeur du système informatique selon l'une quelconque des revendications 11 à 13, dans un procédé selon l'une des revendications 1 à 6, obtient périodiquement ou en continu au moins une propriété physique du produit sortant du réacteur à temps de séjour et la compare à une valeur cible prédéfinie et, en cas d'écart par rapport à la valeur cible donnée, adapte de manière dynamique la température et/ou le débit des éduits entrant dans le réacteur à temps de séjour et/ou le débit à travers le réacteur à temps de séjour et/ou la température du réacteur à temps de séjour.

**15.** Procédé mis en œuvre par ordinateur pour la commande de la préparation de prépolymères de polyuréthane comme partie d'un procédé selon l'une quelconque des revendications 1 à 6, qui comprend au moins :

- la réception de données d'au moins une propriété physique d'un produit sortant d'un réacteur à temps de séjour en temps réel,
- la comparaison des données avec une valeur cible prédéfinie de l'au moins une propriété physique stockée dans une base de données pouvant être obtenue, et
- lors d'un écart par rapport à la valeur cible prédéfinie, l'adaptation dynamique d'une température et/ou d'un débit des éduits entrant dans le réacteur à temps de séjour et/ou d'un débit à travers le réacteur à temps de séjour et/ou d'une température du réacteur à temps de séjour par commande.

**Figur 1**

**Figur 2**

(1)

(2)

(3)

(4) (5) (6) (7)

(3a)

(8)

(2a)

(1a)

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 199429361 A1
- DE 19823392 A1
- DE 102010027052 A1
- WO 2001091897 A1
- WO 2001014441 A1
- EP 0722962 A2

**In der Beschreibung aufgeführte Nicht-Patentliteratur**

- Polyurethane. Kunststoffhandbuch. Carl-Hanser-Verlag, 1966, vol. 7
- KUNSTSTOFFHANDBUCH. CARL-HANSER-VERLAG, 1983
- KUNSTSTOFFHANDBUCH. CARL-HANSER-VERLAG, 1993